(19) Europäisches Patentamt
European Patent Office
Office européen des brevets

(11) **EP 2 488 609 B1**

(12) **FASCICULE DE BREVET EUROPEEN**

(45) Date de publication et mention de la délivrance du brevet:
**10.12.2014 Bulletin 2014/50**

(21) Numéro de dépôt: **10782646.3**

(22) Date de dépôt: **06.10.2010**

(51) Int Cl.:
*C10G 45/08* (2006.01)    *C10G 45/12* (2006.01)
*C10G 47/20* (2006.01)    *B01J 29/06* (2006.01)
*B01J 29/10* (2006.01)    *B01J 29/14* (2006.01)
*B01J 29/16* (2006.01)    *C10G 65/12* (2006.01)

(86) Numéro de dépôt international:
**PCT/FR2010/000669**

(87) Numéro de publication internationale:
**WO 2011/045483 (21.04.2011 Gazette 2011/16)**

(54) **PROCEDE D'HYDROCRAQUAGE METTANT EN OEUVRE UNE ZEOLITHE MODIFIEE**

HYDROCRACKVERFAHREN MIT EINEM MODIFZIERTEN ZEOLITH

HYDROCRACKING METHOD USING A MODIFIED ZEOLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2009 FR 0904911**

(43) Date de publication de la demande:
**22.08.2012 Bulletin 2012/34**

(73) Titulaire: **IFP Energies nouvelles**
**92852 Rueil-Malmaison Cedex (FR)**

(72) Inventeur: **SIMON, Laurent**
**F-69100 Villeurbanne (FR)**

(56) Documents cités:
**FR-A1- 2 926 086     FR-A1- 2 926 087**
**US-A- 4 451 572**

• **KLEMM E ET AL: "Controlling Acidity and Selectivity of HY-Type Zeolites by Silanation", JOURNAL OF CATALYSIS, ACADEMIC PRESS, DULUTH, MN, US LNKD- DOI:10.1006/JCAT. 1997.1915, vol. 173, no. 1, 1 janvier 1998 (1998-01-01), pages 177-186, XP004465456, ISSN: 0021-9517**
• **Susana Lopes Silva: "Study of hydrocracking catalysts based on modified USY zeolites", Instituto Superior Tecnico , 30 septembre 2009 (2009-09-30), XP002586872, Extrait de l'Internet: URL:https://dspace.ist.utl.pt/bitstream/22 95/350559/1/disssertacao.pdf [extrait le 2010-06-14]**

EP 2 488 609 B1

## Description

### Domaine technique

La présente invention concerne un procédé d'hydroconversion et en particulier un procédé d'hydrocraquage et / ou d'hydrotraitement mettant en oeuvre un catalyseur comprenant une phase active contenant au moins un élément hydro-déshydrogénant choisi parmi les éléments du groupe VIB et du groupe VIII non noble de la classification périodique, pris seuls ou en mélange et un support comprenant au moins une zéolithe modifiée selon un procédé de modification comportant au moins a) une étape d'introduction d'au moins un cation alcalin appartenant aux groupes IA ou IIA de la classification périodique, b) une étape de traitement de ladite zéolithe en présence d'au moins un composé moléculaire contenant au moins un atome de silicium, c) au moins un échange partiel des cations alcalins par des cations $NH_4^+$ de sorte que la teneur en cations alcalins restante dans la zéolithe modifiée à l'issue de l'étape c) soit telle que le rapport molaire cation alcalin/Aluminium est compris entre 0,2:1 et 0,01:1 et d) au moins une étape de traitement thermique, ladite zéolithe présentant, avant d'être modifiée, au moins une série de canaux dont l'ouverture est définie par un anneau à 12 atomes d'oxygène (12MR), ledit catalyseur étant un catalyseur phase sulfure.

En particulier, l'invention concerne l'hydrocraquage de charges hydrocarbonées contenant par exemple des composés aromatiques, et/ou oléfiniques, et/ou naphténiques, et/ou paraffiniques à l'exclusion des charges issues du procédé Fischer-Tropsch et contenant éventuellement des métaux, et/ou de l'azote, et/ou de l'oxygène et/ou du soufre.

L'objectif du procédé d'hydrocraquage est essentiellement la production de distillats moyens, c'est-à-dire une coupe kérosène ayant un point d'ébullition compris entre 150 et 250°C, et une coupe gazole ayant un point d'ébullition compris entre 250 et 380°C.

### Art Antérieur

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports dont les surfaces varient généralement de 150 à 800 $m^2.g^{-1}$ et présentant une acidité superficielle, telles que les alumines halogénées (chlorées ou fluorées notamment), les combinaisons d'oxydes de bore et d'aluminium, les silice-alumine amorphes et les zéolithes. La fonction hydrogénante est apportée soit par un ou plusieurs métaux du groupe VIB de la classification périodique des éléments, soit par une association d'au moins un métal du groupe VIB de la classification périodique et au moins un métal du groupe VIII.

L'équilibre entre les deux fonctions acide et hydrogénante est un des paramètres qui régit l'activité et la sélectivité du catalyseur. Une fonction acide faible et une fonction hydrogénante forte donnent des catalyseurs peu actifs, travaillant à température en général élevée (supérieure ou égale à 390-400°C), et à vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens (carburéacteurs et gazoles). Inversement, une fonction acide forte et une fonction hydrogénante faible donnent des catalyseurs actifs, mais présentent de moins bonnes sélectivités en distillats moyens.

Un type de catalyseurs conventionnels d'hydrocraquage est à base de supports amorphes modérément acides, tels les silice-alumines par exemple. Ces systèmes sont utilisés pour produire des distillats moyens de bonne qualité, et éventuellement, des bases huiles. Ces catalyseurs sont par exemple utilisés dans les procédés en une étape. L'inconvénient de ces catalyseurs à base de support amorphe est leur faible activité.

Les catalyseurs comportant par exemple de la zéolithe Y de type structural FAU, ou les catalyseurs comportant par exemple une zéolithe de type bêta présentent quant à eux une activité catalytique supérieure à celle des silice-alumines, mais présentent des sélectivités en distillats moyens (carburéacteurs et gazoles) plus faibles. Cette différence est attribuée à la différence de force des sites acides sur les deux types de matériaux.

La modification de zéolithe par dépôt de composés contenant au moins un composé moléculaire contenant au moins un atome de silicium a été très largement étudiée par le passé. En autre, on peut citer le brevet US 4,402,867 qui décrit une méthode de préparation d'un catalyseur à base de zéolithe comprenant une étape consistant à déposer en phase aqueuse au moins 0,3% poids de silice amorphe à l'intérieur des pores de la zéolithe. Le brevet US 4,996,034 décrit un procédé de substitution d'atomes d'aluminium présents dans une charpente zéolithique par des atomes de silicium, ledit procédé étant réalisé en une étape en milieu aqueux utilisant des sels de fluorosilicates. Le brevet US 4,451,572 décrit la préparation d'un catalyseur zéotithique comprenant une étape de dépôt de matières organosiliciques en phase vapeur ou liquide, les zéolithes visées étant des zéolithes à larges pores, en particulier la zéolithe Y. La zéolithe traitée par cette méthode contient cependant plus de 23% de cation alcalin Na+ dans la structure de la zéolithe après modification.

**Intérêt de l'invention**

Les travaux de recherche effectués par le demandeur sur la modification de nombreuses zéolithes et solides microporeux cristallisés et sur les phases actives hydrogénantes, l'ont conduit à découvrir que, de façon surprenante, un catalyseur d'hydrocraquage et/ou d'hydrotraitement de charges hydrocarbonées comprenant une phase active contenant au moins un élément hydro-déshydrogénant choisi parmi les éléments du groupe VIB et du groupe VIII non noble de la classification périodique, pris seuls ou en mélange et un support comprenant au moins une zéolithe présentant au moins une série de canaux dont l'ouverture est définie par un anneau à 12 atomes d'oxygène (12MR), ladite zéolithe étant modifiée par a) au moins une étape d'introduction d'au moins un cation alcalin appartenant aux groupes IA ou IIA de la classification périodique et de préférence le cation alcalin Na+, b) une étape de traitement de ladite zéolithe en présence d'au moins un composé moléculaire contenant au moins un atome de silicium, c) au moins un échange partiel des cations alcalins par des cations $NH_4^+$ et d) au moins une étape de traitement thermique, ledit catalyseur étant un catalyseur phase sulfure et comprenant éventuellement au moins une matrice amorphe, éventuellement au moins un élément dopant en quantité contrôlée choisi parmi le phosphore, le bore et le silicium, éventuellement au moins un élément du groupe VB de la classification périodique des éléments, et éventuellement un élément du groupe VIIA, permettait d'obtenir une activité plus élevée, c'est à dire un niveau de conversion plus élevé, en hydrocraquage, et en hydrotraitement de charges hydrocarbonées tout en permettant d'obtenir un rendement en distillats moyens (kérosène et gazoles) plus élevé et donc de minimiser le rendement en naphta.

**Description détaillée du catalyseur selon l'invention**

Conformément à l'invention, le procédé met en oeuvre un catalyseur comprenant une phase active contenant au moins un élément hydro-déshydrogénant choisi parmi les éléments du groupe VIB et du groupe VIII non noble de la classification périodique, pris seuls ou en mélange, ledit catalyseur étant un catalyseur phase sulfure.

La phase hydrogénante

De préférence, les éléments du groupe VIB de la classification périodique sont choisis dans le groupe formé par le tungstène et le molybdène, pris seuls ou en mélange. Selon un mode de réalisation préféré, l'élément hydro-déshydrogénant choisi dans le groupe formé par les éléments du groupe VIB de la classification périodique est le molybdène. Selon un autre mode de réalisation préféré, l'élément hydro-déshydrogénant choisi dans le groupe formé par les éléments du groupe VIB de la classification périodique est le tungstène.

De préférence, les éléments non nobles du groupe VIII de la classification périodique sont choisis dans le groupe formé par le cobalt et le nickel, pris seuls ou en mélange. Selon un mode de réalisation préféré, l'élément hydro-déshydrogénant choisi dans le groupe formé par les éléments du groupe VIII non noble est le cobalt. Selon un autre mode de réalisation préféré, l'élément hydro-déshydrogénant choisi dans le groupe formé par les éléments du groupe VIII non noble est le nickel.

De préférence, ledit catalyseur comprend au moins un métal du groupe VIB en combinaison avec au moins un métal non noble du groupe VIII, les éléments non nobles du groupe VIII étant choisi dans le groupe formé par le cobalt et le nickel, pris seuls ou en mélange et les éléments du groupe VIB étant choisi dans le groupe formé par le tungstène et le molybdène, pris seuls ou en mélange.

D'une manière avantageuse, on utilise les associations de métaux suivantes : nickel-molybdène, cobalt-molybdène, nickel-tungstène, cobalt-tungstène, les associations préférées sont : nickel-molybdène, cobalt-molybdène, cobalt-tungstène, nickel-tungstène et encore plus avantageusement nickel-moybdène et nickel-tungstène.

Dans le cas où le catalyseur comprend au moins un métal du groupe VIB en combinaison avec au moins un métal non noble du groupe VIII, la teneur en métal du groupe VIB est avantageusement comprise, en équivalent oxyde, entre 5 et 40 % en poids par rapport à la masse totale dudit catalyseur, de manière préférée entre 10 et 35 % en poids et de manière très préférée entre 15 et 30 % en poids et la teneur en métal non noble du groupe VIII est avantageusement comprise, en équivalent oxyde, entre 0,5 et 10 % en poids par rapport à la masse totale dudit catalyseur, de manière préférée entre 1 et 8 % en poids et de manière très préférée entre 1,5 et 6 % en poids.

Dans le cas où le catalyseur comprend au moins un métal du groupe VIB en combinaison avec au moins un métal non noble du groupe VIII, ledit catalyseur est un catalyseur sulfuré.

Il est également possible d'utiliser des associations de trois métaux par exemple nickel-cobalt-molybdène, nickel-molybdène-tungstène, nickel-cobalt-tungstène.

D'une manière avantageuse, on utilise les associations de métaux suivantes : nickel-niobium-molybdène, cobalt-niobium-molybdène, nickel-niobium-tungstène, cobalt-niobium-tungstène, les associations préférées étant : nickel-niobium-molybdène, cobalt-niobium-molybdène. Il est également possible d'utiliser des associations de quatre métaux par exemple nickel-cobalt-niobium-molybdène.

Le catalyseur peut également avantageusement contenir :

- de 0 à 20% en poids, de préférence de 0,1 à 15% en poids et de manière encore plus préférée de 0,1 à 10% en poids par rapport à la masse totale du catalyseur d'au moins un élément dopant choisi dans le groupe constitué par le silicium, le bore et le phosphore, non compris le silicium contenu dans la charpente de la zéolithe et éventuellement
- de 0 à 60% en poids, de préférence de 0,1 à 50% en poids, et de manière encore plus préférée de 0,1 à 40% en poids par rapport à la masse totale du catalyseur, d'au moins un élément choisi dans le groupe VB et de préférence le niobium et éventuellement encore
- de 0 à 20% en poids, de préférence de 0,1 à 15% en poids et de manière encore plus préférée de 0,1 à 10% en poids par rapport à la masse totale du catalyseur d'au moins un élément choisi dans le groupe VIIA, de préférence le fluor.

Conformément à l'invention, le catalyseur utilisé dans le procédé selon l'invention comporte un support comprenant au moins une zéolithe modifiée et avantageusement une matrice minérale poreuse de type oxyde, ledit support comprenant et de préférence étant constitué de, de préférence :

- 0,1 à 99,8% en poids, de préférence de 0,1 à 80% en poids, de manière encore plus préférée de 0,1 à 70% en poids, et de manière très préférée 0,1 à 50% en poids de zéolithe modifiée selon l'invention par rapport à la masse totale du catalyseur,
- 0,2 à 99,9% en poids, de préférence de 20 à 99,9% de manière préférée de 30 à 99,9% en poids, et de manière très préférée de 50 à 99,9% en poids par rapport à la masse totale du catalyseur, d'au moins une matrice minérale poreuse de type oxyde.

La zéolithe selon l'invention

Conformément à l'invention, la zéolithe contenue dans le support du catalyseur utilisé dans le procédé selon l'invention, comprend au moins une série de canaux dont l'ouverture est définie par un anneau contenant 12 atomes d'oxygène (12MR) avant d'être modifiée. Ladite zéolithe est choisie parmi les zéolithes définies dans la classification "Atlas of Zeolite Structure Types", Ch. Baerlocher, L. B. Mc Cusker, D.H. Olson, 6ème Edition, Elsevier, 2007, Elsevier" présentant au moins une série de canaux dont l'ouverture de pores est définie par un anneau contenant 12 atomes d'oxygène. La zéolithe initialement utilisée, avant d'être modifiée, contient avantageusement, en plus d'au moins une série de canaux dont l'ouverture de pores est définie par un anneau contenant 12 atomes d'oxygène (12MR), au moins une série de canaux dont l'ouverture de pores est définie par un anneau contenant 8 atomes d'oxygène (8 MR) et / ou au moins une série de canaux dont l'ouverture de pores est définie par un anneau contenant 10 atomes d'oxygène (10 MR).

La zéolithe peut avantageusement contenir au moins un autre élément T, différent du silicium et de l'aluminium, s'intégrant sous forme tétraédrique dans la charpente de la zéolithe. De préférence, ledit élément T est choisi parmi le fer, le germanium, le bore et le titane et représente une portion pondérale comprise entre 2 et 30% de l'ensemble des atomes constitutifs de la charpente zéolithique autre que les atomes d'oxygène. La zéolithe présente alors un rapport atomique (Si+T)/Al compris entre 2 et 200, de préférence compris entre 3 et 100 et de manière très préférée compris entre 4 et 80, T étant défini comme précédemment.

De préférence, la zéolithe initialement utilisée est une zéolithe FAU et de manière très préférée, la zéolithe initiale est la zéolithe Y.

Ladite zéolithe peut avantageusement être désaluminée de toutes les manières connues par l'homme du métier, de manière à ce que le rapport atomique de charpente de silicium sur aluminium de la zéolithe soit compris entre 2,5 et 200, de manière préférée entre 3 et 100 et de manière encore plus préférée entre 4 et 80. Le rapport atomique de charpente silicium sur aluminium Si/Al de la zéolithe est mesurée par RMN du silicium et de l'aluminium selon une méthode connue de l'homme du métier.

La zéolithe de type structural FAU ayant subi une ou plusieurs étapes de désalumination qui présente un réseau tridimensionnelles de canaux dont l'ouverture est définie par un anneau à 12 atomes d'oxygène (12 MR) convient pour la mise en oeuvre du catalyseur utilisé dans le procédé selon l'invention. De préférence, la zéolithe initialement utilisée est une zéolithe FAU désaluminée et de manière très préférée, la zéolithe initiale est la zéolithe Y désaluminée

Procédé de modification de la zéolithe contenue dans le support du catalyseur utilisé dans le procédé selon l'invention.

Conformément à l'invention, la zéolithe contenue dans le support du catalyseur utilisé dans le procédé selon l'invention, présentant initialement, avant d'être modifiée, au moins une série de canaux dont l'ouverture est définie par un anneau contenant 12 atomes d'oxygènes, et de préférence la zéolithe Y désaluminée, est modifiée par a) une étape d'introduction d'au moins un cation alcalin appartenant aux groupes IA ou IIA de la classification périodique, b) une étape de traitement de ladite zéolithe en présence d'au moins un composé moléculaire contenant au moins un atome de silicium, c) au moins un échange partiel des cations alcalins par des cations $NH_4^+$ et d) au moins une étape de traitement thermique.

Ladite zéolithe initiale est donc modifiée selon un procédé de modification comportant au moins une étape a) d'introduction d'au moins un cation alcalin appartenant aux groupes IA et IIA de la classification périodique des éléments, le(s)dit(s) cation(s) étant de préférence choisi(s) parmi les cations $Na^+$, $Li^+$, $K^+$, $Rb^+$, $Cs^+$, $Ba^{2+}$ et $Ca^{2+}$ et de manière très préférée, ledit cation étant le cation $Na^+$. Cette étape peut-être réalisée par toutes les méthodes connues de l'homme du métier et de préférence, celle étape est réalisée par la méthode dite d'échange d'ions.

A l'issue de l'étape a) du procédé de modification, la zéolithe contenue dans le support du catalyseur utilisé dans le procédé selon l'invention se trouve sous forme cationique.

Le procédé de modification de ladite zéolithe comporte ensuite une étape b) de traitement en présence d'au moins un composé moléculaire contenant au moins un atome de silicium. Cette étape est appelée étape de sélectivation de ladite zéolithe. Par "sélectivation", on entend au sens de la présente invention, la neutralisation de l'acidité de chacun des cristaux de la zéolithe cationique. La neutralisation de l'acidité peut se faire par toute méthode connue de l'Homme du métier. Les méthodes conventionnelles emploient généralement des composés moléculaires contenant des atomes pouvant interagir avec les sites des cristaux de la zéolithe. Les composés moléculaires utilisés dans le cadre de l'invention sont des composés moléculaires organiques ou inorganiques contenant un ou plusieurs atome(s) de silicium.

Aussi, conformément à l'étape b) de traitement, la zéolithe cationique préparée selon l'étape a), est soumise à une étape de traitement en présence d'au moins un composé moléculaire contenant au moins un atome de silicium. Ladite étape b) permet le dépôt d'une couche dudit composé moléculaire contenant au moins un atome de silicium à la surface des cristaux de la zéolithe qui se transformera après l'étape c) en une couche de silice amorphe sur la surface de chacun des cristaux de la zéolithe.

De préférence, le composé moléculaire contenant au moins un atome de silicium est choisi parmi les composés de formule $Si\text{-}R_4$ et $Si_2\text{-}R_6$ où R est choisi parmi l'hydrogène, un groupe alkyle, aryle, acyle, un groupe alkoxy (O-R'), un groupe hydroxyl (-OH) ou un halogène, et de préférence un groupe alkoxy (O-R'). Au sein d'une même molécule $Si\text{-}R_4$ ou $Si_2\text{-}R_6$, le groupement R peut avantageusement être soit identique soit différent. De préférence, le composé moléculaire est choisi parmi les composés de formule $Si_2H_6$ ou $Si(C_2H_5)_3(CH_3)$. Ainsi, le composé moléculaire contenant au moins un atome de silicium employé dans l'étape b) du procédé selon l'invention peut avantageusement être un composé de type silane, disilane, alkylsilane, alkoxysilane ou siloxane.

Ledit composé moléculaire employé pour la mise en oeuvre de l'étape b) selon l'invention comprend de préférence au plus deux atomes de silicium par molécule.

De manière très préférée, ledit composé moléculaire présente une composition de formule générale $Si\text{-}(OR')_4$ où R' est un groupement alkyle, aryle ou acyle, de préférence un groupement alkyle et de manière très préférée un groupement éthyle.

De manière très préférée, le composé moléculaire contenant au moins un atome de silicium est le composé moléculaire tétraéthylorthosilicate (TEOS) de formule $Si(OCH_2CH_3)_4$.

Ladite étape b) du procédé de modification qui consiste à traiter la zéolithe cationique échangée selon l'étape a) en présence d'au moins un composé moléculaire contenant au moins un atome de silicium, est avantageusement réalisée par dépôt dudit composé sur les surfaces interne et externe de la zéolithe. On peut procéder à un dépôt en phase gazeuse appelé dépôt CVD ("Chemical Vapor Deposition") ou à un dépôt en phase liquide appelé dépôt CLD ("Chemical Liquid Déposition") par toutes les méthodes connues de l'homme du métier. De manière préférée, ladite étape b) est réalisée en procédant au dépôt dudit composé moléculaire contenant au moins un atome de silicium en phase liquide.

Si l'étape b) du procédé de modification est réalisée par dépôt par phase gazeuse (CVD), elle est avantageusement réalisée dans un réacteur à lit fixe. Préalablement à la réaction de dépôt en phase gazeuse (CVD) dans ledit réacteur à lit fixe, la zéolithe est préférentiellement activée. L'activation de la zéolithe dans le réacteur à lit fixe est réalisée sous oxygène, sous air ou sous gaz inerte, ou sous un mélange d'air et de gaz inerte ou d'oxygène et gaz inerte. La température d'activation de la zéolithe est avantageusement comprise entre 100 et 600°C, et très avantageusement entre 300 et 550°C. Le composé moléculaire contenant au moins un atome de silicium devant être déposé sur la surface externe de chacun des cristaux de la zéolithe est envoyé dans le réacteur en phase vapeur, ledit composé moléculaire étant dilué dans un gaz vecteur qui peut être soit de hydrogène ($H_2$), soit de l'air, soit de l'Argon (Ar), soit de l'hélium (He), soit encore de l'azote ($N_2$), préférentiellement le gaz vecteur est un gaz inerte choisi parmi Ar, He, et $N_2$. Ledit composé moléculaire contenant au moins un atome de silicium est déposé sur la surface externe de ladite zéolithe en phase vapeur. Pour obtenir une couche de silice amorphe de qualité optimale sur la surface externe de la zéolithe à l'issue de l'étape c), il est nécessaire de bien choisir les conditions opératoires pour le dépôt du composé moléculaire contenant au moins un atome de silicium. En particulier, la température du lit de zéolithe pendant le dépôt est préférentiellement comprise entre 10 et 300°C, et très préférentiellement comprise entre 50 et 200°C, la pression partielle, dans la phase gaz, du composé moléculaire à déposer sur la surface externe de la zéolithe est préférentiellement comprise entre 0,001 et 0,5 bar, et très préférentiellement comprise entre 0,01 et 0,2 bar, la durée du dépôt est préférentiellement comprise entre 10 minutes et 10 heures et très préférentiellement comprise entre 30 minutes et 5 heures et encore plus préférentiellement entre 1 et 3 heures.

Si l'étape b) du procédé de modification est réalisée par dépôt par phase liquide (CLD), elle est avantageusement réalisée sous agitation. Un dépôt en phase CLD peut être fait soit en milieu aqueux, soit dans un solvant organique. Lors de l'imprégnation en milieu aqueux du composé moléculaire contenant au moins un atome de silicium, on pourra ou non ajouter un ou plusieurs tensioactif(s) dans la solution d'imprégnation. Le dépôt CLD est bien connu de l'Homme du métier (Chon et al., Studies in Surface Science and Catalysis, vol. 105, 2059-2065, 1997). De manière préférée, ledit composé moléculaire contenant au moins un atome de silicium est déposé sur la surface externe de ladite zéolithe dans un solvant organique anhydre. Le solvant organique est avantageusement choisi parmi les molécules saturées ou insaturées contenant de 5 à 10 atomes de carbone, et de manière préférée de 6 à 8 atomes de carbone. Pour obtenir une couche de silice amorphe de qualité optimale sur la surface externe de la zéolithe à l'issue de l'étape c), il est nécessaire de bien choisir les conditions opératoires pour le dépôt du composé moléculaire contenant au moins un atome de silicium. En particulier, la température de la solution de solvant organique est préférentiellement comprise entre 10 et 100°C, et très préférentiellement comprise entre 30 et 90°C. La quantité de silice ajoutée à la solution de solvant anhydre est avantageusement comprise entre 0,0001 et 5% poids, de préférence entre 0,0001 et 2 % poids, et de manière encore plus préférée entre 0,0005 et 1% poids par rapport à la quantité de zéolithe. La durée du dépôt est préférentiellement comprise entre 5 minutes et 10 heures, préférentiellement comprise entre 30 minutes et 5 heures et encore plus préférentiellement entre 1 et 3 heures.

Le procédé de modification de la zéolithe comporte ensuite une étape c) correspondant à au moins un échange partiel des cations alcalins appartenant aux groupes IA et IIA de la classification périodique introduits lors de l'étape a) et de préférence des cations $Na^+$ par des cations $NH_4^+$. On entend par échange partiel des cations alcalins et de préférence des cations $Na^+$, par des cations $NH_4^+$, l'échange de 80 à 99%, de manière préférée de 80 et 98,5 %, de manière plus préférée de 85 à 98% et de manière encore plus préférée de 90 à 98% des cations alcalins et de préférence des cations Na+ par des cations NH4+. La quantité de cations alcalins restante et de préférence, la quantité de cations Na+ restante dans la zéolithe modifiée, par rapport à la quantité de cations NH4+ initialement présente dans la zéolithe, est avantageusement comprise entre 1 et 20 %, de préférence entre 1,5 et 20% de manière préférée, entre 2 et 15% et de manière plus préférée entre 2 et 10%.

De préférence, pour cette étape, on procède à plusieurs échange(s) ionique(s) avec une solution contenant au moins un sel d'ammonium choisi parmi les sels de chlorate, sulfate, nitrate, phosphate, ou acetate d'ammonium, de manière à éliminer au moins en partie, les cations alcalins et de préférence les cations Na+ présents dans la zéolithe. De préférence, le sel d'ammonium est le nitrate d'ammonium NH4NO3.

Ainsi, conformément à l'invention, la teneur en cations alcalins restante et de préférence en cations Na+ dans la zéolithe modifiée à l'issue de l'étape c) est de préférence telle que le rapport molaire cation alcalin/Aluminium et de préférence le rapport molaire Na/Al, est compris entre 0,2:1 et 0,01:1, de préférence compris entre 0,2:1 et 0,015:1, de manière plus préférée compris entre 0,15:1 et 0,02:1 et de manière encore plus préférée entre 0,1:1 et 0,02:1.

Le rapport Na/Al désiré est obtenu en ajustant la concentration en NH4+ de la solution d'échange cationique, la température de l'échange cationique et le nombre d'échange cationique. La concentration de la solution en NH4+ dans la solution varie avantageusement entre 0,01 et 12 mol/L, et de préférence entre 1 et 10 mol/L. La température de l'étape d'échange est avantageusement comprise entre 20 et 100°C, de préférence entre 60 et 95°C, de manière préférée entre 60 et 90°C de manière plus préférée entre 60 et 85°C et de manière encore plus préférée entre 60 et 80°C. Le nombre d'échange cationique varie avantageusement entre 1 et 10 et de préférence entre 1 et 4.

Le maintien d'une teneur contrôlée en cations alcalins et de préférence en cations Na+ à la place de protons permet de neutraliser les sites de Brønsted et de Lewis les plus acides de la zéolithe, ce qui diminue le craquage secondaire des molécules de distillats moyens en essence lors des réactions d'hydrocraquage. Cet effet permet d'obtenir un gain en sélectivité en distillats moyens. Si la quantité des cations alcalins et de préférence des cations Na+ restante dans la structure de la zéolithe modifiée est trop importante, le nombre de sites acides de Brønsted diminue trop fortement, ce qui engendre une perte d'activité du catalyseur.

Le procédé de modification de la zéolithe comporte ensuite au moins une étape d) de traitement thermique. Ce traitement thermique permet à la fois la décomposition du composé moléculaire contenant au moins un atome de silicium déposé sur la zéolithe à l'issue de l'étape b) et la transformation des cations $NH_4^+$, partiellement échangés à l'issue de l'étape c), en protons. Le traitement thermique selon l'invention est réalisé à une température préférentiellement comprise entre 200 et 700°C, plus préférentiellement entre 300 et 500°C. Ladite étape de traitement thermique est avantageusement mise en oeuvre sous air, sous oxygène, sous hydrogène, sous azote ou sous argon ou sous un mélange d'azote et d'argon. La durée de ce traitement est avantageusement comprise entre 1 et 5 heures. A l'issue de ladite étape d) de traitement thermique, une couche de silice amorphe est déposée sur la surface de chacun des cristaux de la zéolithe et les protons de la zéolithe sont partiellement régénérés.

<u>La matrice minérale poreuse amorphe ou mal cristallisée de type oxyde</u>

Le support du catalyseur utilisé dans le procédé d'hydrocraquage et/ou d'hydrotraitement selon l'invention contient avantageusement une matrice minérale poreuse, de préférence amorphe, qui est avantageusement constituée d'au moins un oxyde réfractaire. Ladite matrice est avantageusement choisie dans le groupe formé par l'alumine, la silice, les argiles, l'oxyde de titane, l'oxyde de bore et la zircone. La matrice peut être constituée par un mélange d'au moins deux des oxydes cités ci dessus, et de préférence la silice-alumine. On peut choisir également les aluminates. On préfère utiliser des matrices contenant de l'alumine, sous toutes ces formes connues de l'homme du métier, par exemple l'alumine gamma.

On peut aussi avantageusement utiliser des mélanges d'alumine et de silice, des mélanges d'alumine et de silice-alumine.

<u>Préparation du catalyseur</u>

La zéolithe modifiée peut être, sans que cela soit limitatif, par exemple sous forme de poudre, poudre broyée, suspension, suspension ayant subi un traitement de désagglomération. Ainsi, par exemple, la zéolithe modifiée peut avantageusement être mise en suspension acidulée ou non à une concentration ajustée à la teneur finale en zéolithe visée sur le support. Cette suspension appelée couramment une barbotine est alors avantageusement mélangée avec les précurseurs de la matrice.

Selon un mode de préparation préféré, la zéolithe modifiée peut avantageusement être introduite lors de la mise en forme du support avec les éléments qui constituent la matrice. Par exemple, selon ce mode préféré de la présente invention, la zéolithe modifiée selon l'invention est ajoutée à un gel humide d'alumine au cours de l'étape de mise en forme du support.

Une des méthodes préférées de la mise ne forme du support dans la présente invention consiste à malaxer au moins une zéolithe modifiée, avec un gel humide d'alumine pendant quelques dizaines de minutes, puis à passer la pâte ainsi obtenue à travers une filière pour former des extrudés de diamètre compris entre 0,4 et 4 mm.

Selon un autre mode de préparation préférée, la zéolithe modifiée peut être introduite au cours de la synthèse de la matrice. Par exemple, selon ce mode préféré de la présente invention, la zéolithe modifiée est ajoutée au cours de la synthèse de la matrice silico-aluminique ; la zéolithe peut être ajoutée à un mélange composé d'un composé d'alumine en milieu acide avec un composé de silice totalement soluble.

Le support peut être mis en forme par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

Au moins une calcination peut être effectuée après l'une quelconque des étapes de la préparation. Le traitement de calcination est habituellement effectué sous air à une température d'au moins 150°C, de préférence au moins 300°C, de manière plus préférée entre environ 350 et 1000°C.

Les éléments des groupes VIB, et/ou les éléments non nobles du groupe VIII, éventuellement les éléments dopants choisis parmi le phosphore, le bore, le silicium et éventuellement les éléments des groupes VB, et VIIA peuvent être éventuellement introduits, tout ou partie, à toute étape de la préparation, au cours de la synthèse de la matrice, de préférence lors de la mise en forme du support, ou de manière très préférée après la mise en forme du support par toute méthode connue de l'homme du métier. Ils peuvent être introduits après la mise en forme du support et ce après ou avant le séchage et la calcination du support.

Selon un mode préféré de la présente invention, tout ou partie des éléments des groupes VIB, et/ou les éléments non nobles du groupe VIII et éventuellement les éléments dopants choisis parmi le phosphore, le bore, le silicium et éventuellement les éléments des groupes VB, et VIIA peuvent être introduits au cours de la mise en forme du support, par exemple, lors de l'étape de malaxage de la zéolithe modifiée avec un gel d'alumine humide.

Selon un autre mode préféré de la présente invention, tout ou partie des éléments des groupes VIB, et/ou les éléments non nobles du groupe VIII et éventuellement les éléments dopants choisis parmi le phosphore, le bore, le silicium et éventuellement les éléments des groupes VB, et VIIA peuvent être introduits par une ou plusieurs opérations d'imprégnation du support mis en forme et calciné, par une solution contenant les précurseurs de ces éléments. D'une façon préférée, le support est imprégné par une solution aqueuse. L'imprégnation du support est de préférence effectuée par la méthode d'imprégnation dite "à sec" bien connue de l'homme du métier.

Dans le cas ou le catalyseur de la présente invention contient un métal non noble du groupe VIII, les métaux du groupe VIII sont de préférence introduits par une ou plusieurs opérations d'imprégnation du support mis en forme et calciné, après ceux du groupe VIB ou en même temps que ces derniers.

Selon un autre mode préféré de la présente invention, le dépôt de bore et de silicium peut aussi être réalisé de manière simultanée en utilisant par exemple une solution contenant un sel de bore et un composé du silicium de type silicone.

L'imprégnation des éléments du groupe VB et de préférence du niobium peut avantageusement être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

Lorsque au moins un élément dopant, P et/ou B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseur, ou bien encore par l'établissement d'une cartographie de répartition des éléments présents dans le catalyseur par microsonde électronique.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII non nobles qui peuvent être utilisées sont bien connues de l'homme du métier. Par exemple, pour les métaux non nobles on utilisera les nitrates, les sulfates, les hydroxydes, les phosphates, les halogénures comme par exemple, les chlorures, les bromures et les fluorures, les carboxylates comme par exemple les acétates et les carbonates.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène -phosphore ou molybdène-tungstène-phosphore. Ces composés mixtes peuvent être des hétéropolyanions. Ces composés peuvent être des hétéropolyanions d'Anderson, par exemple.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium peuvent être employées. Ainsi, on peut utiliser l'orthosilicate d'éthyle $Si(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les sources d'élément du groupe VB qui peuvent être utilisées sont bien connues de l'homme du métier. Par exemple, parmi les sources de niobium, on peut utiliser les oxydes, tel que le pentaoxyde de diniobium $Nb_2O_5$, l'acide niobique $Nb_2O_5 \cdot H_2O$, les hydroxydes de niobium et les polyoxoniobates, les alkoxydes de niobium de formule $Nb(OR1)_3$ où R1 est un radical alkyle, l'oxalate de niobium $NbO(HC_2O_4)_5$, le niobate d'ammonium. On utilise de préférence l'oxalate de niobium ou le niobate d'ammonium.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2 SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les catalyseurs utilisés dans le procédé selon l'invention ont avantageusement la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée. Les catalyseurs selon l'invention peuvent éventuellement être fabriqués et employés sous la forme de poudre concassée, de tablettes, d'anneaux, de billes, de roues.

Conformément à l'invention, les métaux du groupe VIB et/ou du groupe VIII dudit catalyseur sont présents sous forme sulfure, le traitement de sulfuration étant décrit plus loin.

L'invention concerne également un procédé d'hydrocraquage de charges hydrocarbonées avec lesdits catalyseurs.

**Techniques de caractérisation**

La quantité de cation alcalin appartenant aux groupes IA ou IIA de la classification périodique et de préférence la quantité de cation alcalin $Na^+$, restante dans la zéolithe modifiée après le traitement de modification décrit ci dessus est mesurée par adsorption atomique selon une méthode connue de l'homme du métier.

L'acidité de Lewis et de Bronsted des zéolithes est mesurée par adsorption de Pyridine suivi par spectroscopie infra-rouge (FTIR). L'intégration des bandes caractéristiques de la pyridine coordinée à 1455 cm$^{-1}$ et de la pyridine protonée à 1545 cm$^{-1}$ permet de comparer l'acidité relative des catalyseurs de type Lewis et Brønsted, respectivement. Avant adsorption de la pyridine, la zéolithe est prétraitée sous vide secondaire à 450°C pendant 10h avec un palier intermédiaire à 150°C pendant 1 h. La pyridine est ensuite adsorbée à 150°C puis désorber sous vide secondaire à cette même température avant de prendre les spectres.

Procédés d'hydrocraquage et d'hydrotraitement

L'invention porte sur un procédé d'hydroconversion et en particulier d'hydrocraquage ainsi que sur un procédé d'hydrotraitement de charges hydrocarbonées utilisant le catalyseur décrit ci dessus.

Plus particulièrement, l'invention porte sur un procédé d'hydrocraquage et/ou d'hydrotraitement opérant en présence d'hydrogène, à une température supérieure à 200°C, sous une pression supérieure à 1 MPa, la vitesse spatiale étant comprise entre 0,1 et 20 h$^{-1}$ et la quantité d'hydrogène introduite est telle que le rapport volumique litre d'hydrogène/litre d'hydrocarbure soit compris entre 80 et 5000 l/l.

De préférence, le procédé d'hydrocraquage selon l'invention opèrent en présence d'hydrogène, à une température supérieure à 200°C, de préférence comprise entre 250 et 480°C, de manière préférée entre 320 et 450°C, de manière très préférée entre 330 et 435°C, sous une pression supérieure à 1 MPa, de préférence entre 2 et 25 MPa, de manière préférée entre 3 et 20 MPa, à la vitesse spatiale comprise entre 0,1 et 20 h-1, de préférence 0,1 et 6 h-1, de manière préférée entre 0,2 et 3 h-1, et la quantité d'hydrogène introduite est telle que le rapport volumique litre d'hydrogène/litre d'hydrocarbure est compris entre 80 et 5000 L/L et le plus souvent entre 100 et 2000 L/L. Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15%pds et de manière encore plus préférée comprises entre 20 et 95%pds.

L'invention porte également sur un procédé d'hydrotraitement de charges hydrocarbonées utilisant le catalyseur décrit ci dessus, ledit procédé d'hydrotraitement pouvant avantageusement être placé seul ou en amont d'un procédé d'hydrocraquage. Ledit procédé d'hydrotraitement est décrit plus loin.

Charges

Des charges très variées peuvent être traitées par les procédés selon l'invention décrits ci-dessus. Elles contiennent avantageusement au moins 20% volume et de préférence au moins 80% volume de composés bouillant au-dessus de 340°C.

La charge est avantageusement choisie parmi les LCO (Light Cycle Oil (gazoles légers issus d'une unité de craquage catalytique)), les distillats atmosphériques, les distillats sous vide tels que par exemple gasoils issus de la distillation directe du brut ou d'unités de conversion telles que le FCC, le coker ou la viscoréduction, es charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de.RAT (résidus atmosphériques) et/ou de RSV (résidus sous vide) et/ou d'huiles désasphaltées, et les huiles désasphaltées, prises seules ou en mélange. La liste ci-dessus n'est pas limitative. Les paraffines issues du procédé Fischer-Tropsch sont exclues. Lesdites charges ont de préférence un point d'ébullition T5 supérieur à 340°C, de préférence supérieur à 370°C, c'est à dire que 95% des composés présents dans la charge ont un point d'ébullition supérieur à 340°C, et de manière préférée supérieur à 370°C.

La teneur en azote des charges traitées dans les procédés selon l'invention est avantageusement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés selon l'invention est avantageusement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 1 ppm poids.

La charge peut éventuellement contenir des asphaltènes. La teneur en asphaltènes est généralement inférieure à 3000 ppm poids, de manière préférée inférieure à 1000 ppm poids, de manière encore plus préférée inférieure à 200 ppm poids.

### Sulfuration des catalyseurs

Conformément à l'invention et préalablement à l'injection de la charge, les catalyseurs utilisés dans les procédés selon la présente invention sont soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'Homme du métier consiste à chauffer le catalyseur en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

### Lits de garde

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement. Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0,2 et 0,75. Leur diamètre extérieur peut varier entre 1 et 35 mm. Parmi les formes particulières possibles sans que cette liste soit limitative, nous citons : les cylindres creux, les anneaux creux, les anneaux de Raschig, les cylindres creux dentelés, les cylindres creux crénelés, les roues de charrettes pentaring, les cylindres à multiples trous, etc..

Ces catalyseurs ou lits de garde peuvent avoir été imprégnés par une phase active ou non. De manière préférée, les catalyseurs sont imprégnés par une phase hydro-déshydrogénante. De manière très préférée, la phase CoMo ou NiMo est utilisée.

Ces catalyseurs ou lits de garde peuvent présenter de la macroporosité. Les lits de garde peuvent être commercialisés par Norton-Saint-Gobain, par exemple les lits de garde MacroTrap®. Les lits de garde peuvent être commercialisés par Axens dans la famille ACT : ACT077, ACT645, ACT961 ou HMC841, HMC845, HMC868 ou HMC945. Il peut être particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits de garde préférés selon l'invention sont les HMC et l'ACT961.

### Modes de réalisation

Les procédés d'hydrocraquage selon l'invention mettant en oeuvre les catalyseurs décrits ci dessus, couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Les procédés d'hydrocraquage selon l'invention peuvent avantageusement mettre en oeuvre ledit catalyseur décrit ci dessus seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydrotraitement classique situé en amont du catalyseur utilisé dans le procédé selon la présente invention.

Les procédés d'hydrocraquage selon l'invention peuvent avantageusement également mettre en oeuvre ledit catalyseur décrit ci dessus seul, dans un seul ou plusieurs réacteurs en lit bouillonnant, dans un schéma d'hydrocraquage dit eh une étape, avec ou sans recyclage liquide de la fraction non convertie, éventuellement en association avec un catalyseur d'hydrotraitement classique situé dans un réacteur en lit fixe ou en lit bouillonnant en amont du catalyseur utilisé dans le procédé selon la présente invention.

Le lit bouillonnant s'opère avec retrait de catalyseur usé et ajout journalier de catalyseur neuf afin de conserver une activité du catalyseur stable.

Le catalyseur décrit selon l'invention peut également avantageusement être utilisé dans la première zone réactionnelle d'hydrotraitement, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s), en lit fixe ou en lit bouillonnant.

Procédé dit en une étape

Le procédé d'hydrocraquage selon l'invention peut avantageusement être mis en oeuvre dans un procédé dit en une étape.

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif décrit ci-dessus. Cependant, il est à noter qu'aucune séparation n'intervient entre les deux types de catalyseurs. La totalité de l'effluent en sortie de réacteur est injectée sur ledit catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Le catalyseur décrit selon l'invention est donc avantageusement mis en oeuvre dans un procédé d'hydrocraquage dit en une étape, dans une zone d'hydrocraquage placée en aval d'une zone d'hydroraffinage, aucune séparation intermédiaire n'étant mise en oeuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur décrit selon l'invention, est un catalyseur comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine et de manière encore plus préférée ledit catalyseur comprend du nickel et du tungstène.

Le catalyseur décrit selon l'invention peut également avantageusement être utilisé dans la première zone réactionnelle d'hydroraffinage, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s).

Procédé dit en une étape en lit fixe avec séparation intermédiaire

Le procédé d'hydrocraquage selon l'invention peut avantageusement être mis en oeuvre dans un procédé dit en une étape en lit fixe avec séparation intermédiaire.

Ledit procédé comporte avantageusement une zone d'hydroraffinage, une zone permettant l'élimination partielle de l'ammoniaque, par exemple par un flash chaud, et une zone d'hydrocraquage dans laquelle est mis en oeuvre ledit catalyseur d'hydrocraquage selon l'invention. Ce procédé d'hydrocraquage de charges hydrocarbonées en une étape pour la production de distillats moyens et éventuellement de bases huiles comporte avantageusement au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également avantageusement une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est avantageusement réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote.

Le catalyseur décrit selon l'invention peut également avantageusement être utilisé dans la première zone réactionnelle d'hydroraffinage, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s).

Procédé dit en deux étapes

Le procédé d'hydrocraquage selon l'invention peut avantageusement être mis en oeuvre dans un procédé dit en deux étapes.

L'hydrocraquage en deux étapes, comporte avantageusement une première étape qui a pour objectif, comme dans le procédé "une étape", de réaliser l'hydroraffinage de la charge mais aussi d'atteindre une conversion de cette dernière de l'ordre en général de 40 à 60%. L'effluent issu de la première étape d'hydrocraquage subit ensuite avantageusement une séparation et de préférence une distillation, appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape d'hydrocraquage est traitée.

Ledit catalyseur décrit selon l'invention est avantageusement mis en oeuvre dans la deuxième étape d'hydrocraquage dudit procédé d'hydrocraquage dit en deux étapes. La séparation intermédiaire permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en NH3 ainsi qu'en composés azotés organiques, en général moins de 20 ppm poids voire moins de 10 ppm poids.

Les configurations de lits catalytiques en lit fixe ou en lit bouillonnant décrites dans le cas d'un procédé dit en une étape peuvent avantageusement être utilisées dans la première ou la deuxième étape d'hydrocraquage d'un schéma dit en deux étapes, que le catalyseur selon l'invention soit utilisé seul ou en association avec un catalyseur d'hydroraffinage classique placé en amont de la première étape d'hydrocraquage.

Le catalyseur décrit selon l'invention est donc avantageusement mis en oeuvre dans un procédé d'hydrocraquage dit en deux étapes, dans la deuxième étape d'hydrocraquage placée en aval de la première étape d'hydrocraquage, une séparation intermédiaire étant mise en oeuvre entre les deux zones.

Pour les procédés dits en une étape et pour la première étape d'hydroraffinage des procédés d'hydrocraquage dits en deux étapes, les catalyseurs d'hydroraffinage classique pouvant avantageusement être utilisés sont les catalyseurs comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine, silice alumine ou zéolithique et de manière encore plus préférée ledit catalyseur comprend du nickel et du tungstène ou du nickel et du molybdène.

La première étape d'hydroraffinage des procédé d'hydrocraquage dit en une étape et des procédés d'hydrocraquage dits en deux étapes peuvent avantageusement mettre en oeuvre un ou plusieurs catalyseurs d'hydroraffinage dans un ou plusieurs lits catalytiques différents de manière à réaliser dans le cas de la première étape d'hydroraffinage des procédés d'hydrocraquage dits en deux étapes un raffinage pré-convertissant.

Dans un mode de réalisation préféré, les catalyseurs utilisés dans la première étape d'hydroraffinage des procédés d'hydrocraquage dits en deux étapes sont les catalyseurs décrits selon l'invention.

Hydrotraitement/hydroraffinage de charges hydrocarbonées

L'invention porte également sur un procédé d'hydrotraitement de charges hydrocarbonées utilisant le catalyseur décrit ci dessus, ledit procédé d'hydrotraitement pouvant avantageusement être placé seul ou en amont d'un procédé d'hydrocraquage.

L'hydrotraitement, et l'hydroraffinage de charges hydrocarbonées telles que les coupes pétrolières, les coupes issues du charbon ou les hydrocarbures produits à partir du gaz naturel concerne l'hydrogénation, l'hydrodésulfuration, l'hydrodéazotation, l'hydrodéoxygénation, l'hydrodéaromatisation et l'hydrodémétallation de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre.

Plus particulièrement, les charges employées dans les procédés d'hydrotraitement selon l'invention sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent de préférence des hétéroatomes tels que le soufre, l'oxygène et l'azote et/ou au moins un métal.

Le procédé d'hydrotraitement selon l'invention opère avantageusement à une température comprise entre 200 et 450 C, de préférence entre 250 et 440°C, à une pression comprise entre 1 et 25 MPa, de préférence entre 1 et 18 MPa, à une vitesse volumique horaire comprise entre 0,1 et 20 h$^{-1}$, de manière préférée entre 0,2 et 5 h$^{-1}$, et à un rapport hydrogène/charge exprimé en volume d'hydrogène, mesuré dans les conditions-normales de température et pression, par volume de charge liquide généralement comprise entre 80 UL et 5000 L/L et de préférence entre 100 UL et 2000 L/L.

Dans le cas où ledit procédé d'hydrotraitement est placé seul ou en amont d'un procédé d'hydrocraquage, le catalyseur décrit selon l'invention peut avantageusement être utilisé dans la zone réactionnelle d'hydrotraitement, en prétraitement convertissant, seul ou en association avec un autre catalyseur d'hydrotraitement classique, situé en amont du catalyseur décrit selon l'invention, dans un ou plusieurs lit(s) catalytique(s), dans un ou plusieurs réacteur(s). Le catalyseur utilisé dans le procédé d'hydrocraquage placé en aval du procédé d'hydrotraitement selon l'invention peut avantageusement être identique ou différent du catalyseur utilisé dans le procédé d'hydrotraitement selon l'invention.

**Exemples**

**Exemple 1 - Préparation de la zéolithe modifiée utilisée dans le catalyseur selon l'invention.**

100 g de zéolithes HY désaluminée, de rapport Si / Al de charpente égale à 11,5 et mesuré par RMN du Silicium et de l'Aluminium sont échangés par une solution de NaNO$_3$ pour obtenir la forme cationique NaY de la zéolithe Y. L'échange est réalisé dans un ballon contenant 1 L de solution NaNO$_3$ à 80°C pendant 2 heures, puis la suspension est filtrée et la zéolithe est séchée à 120°C pendant une nuit. La zéolithe NaY obtenue est versée dans un ballon tricol contenant 1 L de toluène anhydre et équipé d'un réfrigérant. Après montée en température à 60°C, la quantité de composé moléculaire tétraéthylorthosilicate TEOS correspondant à 1 % poids de silice est introduite lentement dans la suspension de zéolithe en utilisant une pompe seringue. Après agitation pendant 1 heure, la suspension est filtrée et la zéolithe séchée à 120°C pendant une nuit. La zéolithe modifiée est ensuite échangée 3 fois par une solution 1 N de NH$_4$NO$_3$ pour obtenir la forme NH$_4^+$ partiellement échangée, l'échange étant effectué à une température de 80°C. La décomposition du TEOS et la transformation des cations NH$_4^+$ en protons, se fait sous N$_2$ saturé en H$_2$O à 350°C pendant 2 heures, puis un traitement thermique sous N$_2$ pur est fait à 450°C pendant 2 heures. Les caractérisations des zéolithes mesurées par spectroscopie d'adsorption atomique et adsorption de pyridine suivies par Infra Rouge sont données dans le Tableau 1.

**Exemple 2 - Préparation d'une zéolithe modifiée non conforme à l'invention**

100 g de zéolithes HY désaluminée, de rapport Si / Al de charpente égale à 11,5 et mesuré par RMN du Silicium et de l'Aluminium sont échangés par une solution de NaNO$_3$ pour obtenir la forme cationique NaY de la zéolithe Y. L'échange est réalisé dans un ballon contenant 1 L de solution NaNO$_3$ à 80°C pendant 2 heures, puis la suspension est filtrée et la zéolithe est séchée à 120°C. pendant une nuit. La zéolithe NaY obtenue est versée dans un ballon tricol contenant 1 L de toluène anhydre et équipé d'un réfrigérant. Après montée en température à 60°C, la quantité de composé moléculaire tétraéthylorthosilicate TEOS correspondant à 1% poids de silice est introduite lentement dans la suspension de zéolithe en utilisant une pompe seringue. Après agitation pendant 1 heure, la suspension est filtrée et la zéolithe séchée à 120°C pendant une nuit. La zéolithe modifiée est ensuite échangée 2 fois par une solution 1 N de NH$_4$NO$_3$ pour obtenir la forme NH$_4^+$ partiellement échangée, l'échange étant effectué à reflux, à une température de 100°C. De cette manière, les teneurs en Na$^+$ restantes sur la zéolithe modifiée sont variables et consignées dans le Tableau 1. La décomposition du TEOS et la transformation des cations NH$_4^+$ en protons, se fait sous N$_2$ saturé en H$_2$O à 350°C pendant 2 heures, puis un traitement thermique sous N$_2$ pur est fait à 450°C pendant 2 heures. Les caractérisations des zéolithes mesurées par spectroscopie d'adsorption atomique et adsorption de pyridine suivies par Infra Rouge sont données dans le Tableau 1.

Tableau 1 : Caractérisation des échantillons.

| | HY non modifiée non conforme | Y modifiée échangée 2 fois non conforme | Y modifiée échangée 3 fois (selon invention) |
|---|---|---|---|
| Na/Al | 0,001 | 0,24 | 0,05 |
| quantité de Na+ restante par rapport à la quantité de NH$_4^+$ initialement présente (%) | 0,1 | 24 | 5 |

(suite)

| | HY non modifiée non conforme | Y modifiée échangée 2 fois non conforme | Y modifiée échangée 3 fois (selon invention) |
|---|---|---|---|
| Sites acides de Brønsted (a.u., bande 1545 cm$^{-1}$) après désorption de pyridine à 150°C | 5,5 | 4,8 | 5,0 |
| Sites acides de Lewis (a.u., bande à 1455 cm$^{-1}$ après désorption de pyridine à 150°C | 3,7 | 1,6 | 1,5 |

On appelle zéolithe HY non modifiée non conforme à l'invention, une zéolithe HY désaluminée échangée par une solution de $NH_4NO_3$ pour obtenir la forme cationique de la zéolithe Y mais n'ayant pas été modifiée selon le procédé de modification décrit selon l'invention.

Les résultats analytiques montrent que la quantité de sites acides de Brønsted diminue légèrement et que la quantité de sites acides de Lewis diminue fortement sur les zéolithes modifiées. Cette variation d'acidité varie en sens inverse de la quantité de sodium présente dans les échantillons.

**Exemple 3 - Préparation des catalyseurs**

Les supports de catalyseur selon l'invention contenant les zéolithes modifiées ou non sont fabriqués en utilisant 19,5 g de zéolithe mélangés à 80,5 g d'une matrice composée de boehmite tabulaire ultrafine ou gel d'alumine commercialisée sous le nom SB3 par la société Condéa Chemie Gmbh. Ce mélange de poudre est ensuite mélangé à une solution aqueuse contenant de l'acide nitrique à 66% poids (7% poids d'acide par gramme de gel sec) puis malaxé pendant 15 minutes. La pâte malaxée est ensuite extrudée à travers une filière de diamètre 1,2 mm. Les extrudés sont ensuite calcinés à 500°C durant 2 heures sous air.

Les extrudés de support ainsi préparés sont imprégnés à sec par une solution d'un mélange d'heptamolybdate d'ammonium et de nitrate de nickel et calcinés sous air à 550°C in-situ dans le réacteur. Les teneurs pondérales en oxydes des catalyseurs obtenus sont indiquées dans le Tableau 2.

**Tableau 2 :** Caractéristiques des catalyseurs.

| Zéolithe à la base du catalyseur | HY non modifiée | Y modifiée échangée 2 fois non conforme | Y modifiée échangée 3 fois selon invention |
|---|---|---|---|
| $MoO_3$ (%pds) | 12,1 | 12,4 | 1,2,3 |
| NiO (%pds) | 3,2 | 3,1 | 3,0 |
| $SiO_2$ (%pds) global | 14,7 | 14,1 | 14,1 |
| Complément à 100% (majoritairement composé de $Al_2O_3$ (%pds) | 70,0 | 70,4 | 70,6 |

**Exemple 4 : Comparaison des catalyseurs en hydrocraquage une étape d'un distillat sous vide.**

Les catalyseurs dont les préparations sont décrites dans les exemples précédents sont utilisés dans les conditions de l'hydrocraquage à conversion élevée (60-100%). La charge pétrolière est un distillat sous vide hydrotraité sur un catalyseur industriels à base de nickel / molybdène sur alumine type HRK558 dont les principales caractéristiques sont données dans le Tableau 3.

Aucune étape de séparation intermédiaire n'est mise en ouvre entre l'étape préalable d'hydroraffinage et l'étape d'hydrocraquage.

**Tableau 3** : Caractéristique de la charge hydrotraitée utilisée.

| | |
|---|---|
| Densité (20/4) | 0,869 |
| Soufre (ppm poids) | 502 |
| Azote (ppm poids) | 10 |
| Distillation simulée | |
| point initial | 298°C |
| point 10 % | 369°C |
| point 50 % | 427°C |

(suite)

| Distillation simulée | |
|---|---|
| point 90 % | 481°C |
| point final | 538°C |

On ajoute à la charge hydrotraitée 0,6% poids d'aniline et 2% poids de diméthyl-disulfure afin de simuler les pressions partielles de $H_2S$ et de $NH_3$ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320°C. Notons que toute méthode de sulfuration in-situ ou ex-situ est convenable. Une fois la sulfuration réalisée, la charge décrite dans le Tableau 3 peut être transformée. Les conditions opératoires de l'unité de test sont données dans le Tableau 4.

**Tableau 4 :** Conditions de test des catalyseurs.

| | |
|---|---|
| Pression totale | 9 Mpa |
| Catalyseur | 80 cm$^3$ |
| Débit d'hydrogène | 80 L/h |
| Débit de charge | 80 cm$^3$/h |

Les performances catalytiques sont exprimées par la température qui permet d'atteindre un niveau de conversion brute de 70% et par les rendements en essence et en carburéacteur (kérosène). Ces performances catalytiques sont mesurées sur le catalyseur après qu'une période de stabilisation, généralement au moins 48 heures, ait été respectée.

La conversion brute CB est prise égale à :

$$CB = \% \text{ pds de 380°C moins de l'effluent}$$

avec "380°C moins" représentant la fraction, distillée à une température inférieure ou égale à 380°C.

Le rendement en carburéacteur (kérosène, 150-250, ci dessous Rdt Kéro) est égal au % poids de composés ayant un point d'ébullition compris entre 150 et 250°C dans les effluents. Le rendement en gazole (250-380) est égal au % poids de composés ayant un point d'ébullition compris entre 250 et 380°C dans les effluents.

La température de réaction est fixée de façon à atteindre une conversion brute CB égale à 70% poids. Dans le Tableau 5, nous avons reporté la température de réaction et les rendements en distillat léger et moyens pour les catalyseurs décrits dans les exemples ci-dessus.

**Tableau 5 :** Activités catalytiques des catalyseurs en hydrocraquage.

| | T(°C) | Rdt kérosène (% pds) | Rdt gazole (% pds) |
|---|---|---|---|
| HY non modifiée | 385 | 21,2 | 16,3 |
| Y modifiée échangée 2 fois (non conforme) | 386 | 21,4 | 16,4 |
| Y modifiée échangée 3 fois (selon invention) | 383 | 21,9 | 17,1 |

Le procédé selon l'invention met en évidence que le catalyseur contenant une zéolithe modifiée selon l'invention et utilisé dans ledit procédé selon l'invention est plus actif et conduit à utiliser une température plus faible que les catalyseurs non conformes pour obtenir un niveau de conversion de 70% poids de la fraction 380°C+, tout en permettant d'obtenir des rendements en distillats moyens supérieurs, et donc une meilleure sélectivité en distillats moyens, par rapport à un procédé d'hydrocraquage mettant en oeuvre un catalyseur non conforme contenant une zéolithe non modifiée ou modifiée de manière non conforme à l'invention.

**Revendications**

**1.** Procédé d'hydrocraquage et / ou d'hydrotraitement mettant en oeuvre un catalyseur comprenant une phase active contenant au moins un élément hydro-déshydrogénant choisi parmi les éléments du groupe VIB et du groupe VIII non noble de la classification périodique, pris seuls ou en mélange, et un support comprenant au moins une zéolithe modifiée selon un procédé de modification comportant au moins a) une étape d'introduction d'au moins un cation alcalin appartenant aux groupes IA ou IIA de la classification périodique, b) une étape de traitement de ladite zéolithe en présence d'au moins un composé moléculaire contenant au moins un atome de silicium, c) au moins un échange partiel des cations alcalins par des cations NH4+ de sorte que la teneur en cations alcalins restante dans la zéolithe modifiée à l'issue de l'étape c) soit telle que le rapport molaire cation alcalin/Aluminium est compris entre 0,2:1 et 0,01:1 et d) au moins une étape de traitement thermique, ladite zéolithe présentant, avant d'être modifiée, au moins une série de canaux dont l'ouverture est définie par un anneau à 12 atomes d'oxygène et ledit catalyseur étant un catalyseur phase sulfure.

2. Procédé selon la revendication 1 dans lequel l'élément du groupe VIB est choisi dans le groupe formé par le tungstène et le molybdène, pris seuls ou en mélange.

3. Procédé selon l'une des revendications 1 ou 2 dans lequel l'élément non noble du groupe VIII est choisi dans le groupe formé par le cobalt et le nickel, pris seuls ou en mélange.

4. Procédé selon l'une des revendications 1 à 3 dans lequel ledit catalyseur comprend au moins un métal du groupe VIB en combinaison avec au moins un métal non noble du groupe VIII, la teneur en métal du groupe VIB étant comprise, en équivalent oxyde, entre 5 et 40 % en poids par rapport à la masse totale dudit catalyseur et la teneur en métal non noble du groupe VIII étant comprise, en équivalent oxyde, entre 0,5 et 10 % en poids par rapport à la masse totale dudit catalyseur.

5. Procédé selon l'une des revendications 1 à 4 dans lequel la zéolithe initialement utilisée est la zéolithe Y.

6. Procédé selon l'une des revendications 1 à 5 dans lequel ledit cation alcalin appartenant aux groupes IA et IIA introduit dans l'étape a) est choisi parmi les cations Na+, Li+, K+, Rb+, Cs+, Ba2+ et Ca2+ et de préférence, ledit cation est le cation Na+.

7. Procédé selon l'une des revendications 1 à 6 dans lequel ledit composé moléculaire contenant au moins un atome de silicium est le composé moléculaire tétraéthylorthosilicate (TEOS) de formule Si(OCH2CH3)4.

8. Procédé selon l'une des revendications 1 à 7 dans lequel la teneur en cations alcalins restante dans la zéolithe modifiée à l'issue de l'étape c) est telle que le rapport molaire cation alcalin/Aluminium est compris entre 0,2:1 et 0,015:1,

9. Procédé selon l'une des revendications 1 à 8 dans lequel la température de l'étape d'échange c) est comprise entre 60 et 85°C.

10. Procédé selon l'une des revendications 1 à 9 dans lequel ledit procédé opère en présence d'hydrogène, à une température supérieure à 200°C, sous une pression supérieure à 1 MPa, la vitesse spatiale étant comprise entre 0,1 et 20 $h^{-1}$ et la quantité d'hydrogène introduite est telle que le rapport volumique litre d'hydrogène/litre d'hydrocarbure soit compris entre 80 et 5000l/l.

11. Procédé selon l'une des revendications 1 à 10 dans lequel lesdites charges hydrocarbonées sont choisies parmi les gazoles légers issus d'une unité de craquage catalytique, les distillats atmosphériques, les distillats sous vide, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT et/ou de résidus sous vide et/ou d'huiles désasphaltées, et les huiles désasphaltées, prises seules ou en mélange.

12. Procédé selon l'une des revendications 1 à 11 dans lequel ledit procédé est mis en oeuvre dans un procédé dit en une étape.

13. Procédé selon la revendication 12 dans lequel ledit catalyseur est mis en oeuvre dans une zone d'hydrocraquage placée en aval d'une zone d'hydroraffinage, aucune séparation intermédiaire n'étant mise en oeuvre entre les deux zones.

**14.** Procédé selon l'une des revendications 1 à 11 dans lequel ledit procédé est mis en oeuvre dans un procédé dit en deux étapes.

**15.** Procédé selon la revendications 14 dans lequel ledit catalyseur est mis en oeuvre dans la deuxième étape d'hydrocraquage placée en aval de la première étape d'hydroraffinage, une séparation intermédiaire étant mise en oeuvre entre les deux zones.

**Patentansprüche**

**1.** Verfahren zum Hydrocracken und/oder zur Wasserstoffbehandlung durch Umsetzen eines Katalysators, umfassend eine aktive Phase, die mindestens ein hydrierend-dehydrierendes Element enthält, das aus den Elementen der Gruppe VIB und der Gruppe VIII der nicht edlen Metalle des Periodensystems, allein genommen oder im Gemisch, ausgewählt ist, und einen Träger, umfassend mindestens ein Zeolith, das nach einem Verfahren zum Modifizieren modifiziert ist, umfassend mindestens a) einen Schritt des Einführens von mindestens einem Alkalikation, das zu den Gruppen IA oder IIA des Periodensystems gehört, b) einen Verarbeitungsschritt des Zeoliths in Anwesenheit von mindestens einer molekularen Verbindung, die mindestens ein Siliciumatom enthält, c) mindestens einen teilweisen Austausch der Alkalikationen durch NH4+ Kationen, so dass der Gehalt an Alkalikationen, der in dem Zeolith verbleibt, das nach Abschluss von Schritt c) modifiziert ist, derart ist, dass das Molverhältnis Alkalikation/Aluminium zwischen 0,2:1 und 0,01:1 beträgt, und d) mindestens einen Schritt der Wärmebehandlung, wobei das Zeolith, bevor es modifiziert wird, mindestens eine Reihe von Kanälen aufweist, deren Öffnung durch einen Ring mit 12 Sauerstoffatomen definiert ist, und wobei es sich bei dem Katalysator um einen Sulfidphasenkatalysator handelt.

**2.** Verfahren nach Anspruch 1, wobei das Element der Gruppe VIB aus der Gruppe bestehend aus Wolfram und Molybdän, einzeln oder in Mischung verwendet, ausgewählt ist.

**3.** Verfahren nach einem der Ansprüche 1 oder 2, wobei das Element aus Nichtedelmetall der Gruppe VIII aus der Gruppe bestehend aus Kobalt und Nickel, einzeln oder in Mischung verwendet, ausgewählt ist.

**4.** Verfahren nach einem der Ansprüche 1 bis 3, wobei der Katalysator mindestens ein Metall der Gruppe VIB in Kombination mit mindestens einem Nichtedelmetall der Gruppe VIII umfasst, wobei der Gehalt an Metall der Gruppe VIB, als Oxidäquivalent, zwischen 5 und 40 Gew.% bezogen auf das Gesamtgewicht des Katalysators und der Gehalt an Nichtedelmetall der Gruppe VIII, als Oxidäquivalent, zwischen 0,5 und 10 Gew.% bezogen auf das Gesamtgewicht des Katalysators beträgt.

**5.** Verfahren nach einem der Ansprüche 1 bis 4, wobei das anfänglich verwendete Zeolith das Zeolith Y ist.

**6.** Verfahren nach einem der Ansprüche 1 bis 5, wobei das Alkalikation, das zu den Gruppen IA und IIA gehört, das in dem Schritt a) eingeführt ist, aus den Kationen Na+, Li+, K+, Rb+, Cs+, Ba2+ und Ca2+ ausgewählt ist, und vorzugsweise das Kation das Kation Na+ ist.

**7.** Verfahren nach einem der Ansprüche 1 bis 6, wobei die molekulare Verbindung, die mindestens ein Siliciumatom enthält, die molekulare Verbindung Tetraethylorthosilicat (TEOS) mit der Formel Si(OCH2CH3)4 ist.

**8.** Verfahren nach einem der Ansprüche 1 bis 7, wobei der Gehalt an Alkalikationen, der in dem Zeolith verbleibt, das nach Abschluss von Schritt c) modifiziert ist, derart ist, dass das Molverhältnis Alkalikation/Aluminium zwischen 0,2:1 und 0,015:1 beträgt.

**9.** Verfahren nach einem der Ansprüche 1 bis 8, wobei die Temperatur des Schrittes des Austauschens c) zwischen 60 und 85 °C beträgt.

**10.** Verfahren nach einem der Ansprüche 1 bis 9, wobei das Verfahren in Gegenwart von Wasserstoff bei einer Temperatur von über 200 °C unter einem Druck von mehr als 1 MPa wirkt, wobei die Raumgeschwindigkeit zwischen 0,1 und 20 h$^{-1}$ beträgt und die Menge an eingeleitetem Wasserstoff derart ist, dass das Volumenverhältnis von Liter Wasserstoff/Liter Kohlenwasserstoff zwischen 80 und 5.000l/l beträgt.

**11.** Verfahren nach einem der Ansprüche 1 bis 10, wobei die Kohlenwasserstoffbeschickungen aus den leichten Gasölen, die aus einer katalytischen Crackeinheit stammen, den atmosphärischen Destillaten, den Vakuumdestillaten, den Beschickungen, die aus Einheiten zur Extraktion von Aromaten der Schmierölbasen stammen oder aus der Lösungsmittelentparaffinierung von Schmierölbasen hervorgegangen sind, den Destillaten, die aus Verfahren zur Entschwefelung oder zur Hydrierumwandlung im Festbett oder im Wirbelbett von RAT (atmosphärischen Rückständen) und/oder Vakuumrückständen und/oder entasphaltierten Ölen stammen, und den entasphaltierten Ölen, einzeln oder in Mischung verwendet, ausgewählt sind.

**12.** Verfahren nach einem der Ansprüche 1 bis 11, wobei das Verfahren in einem sogenannten Einschrittverfahren durchgeführt wird.

**13.** Verfahren nach Anspruch 12, wobei der Katalysator in einer Hydrocrackzone umgesetzt wird, die einem Bereich für die Hydroraffination vorgelagert angeordnet ist, wobei keine intermediäre Trennung zwischen den beiden Bereichen erfolgt.

**14.** Verfahren nach einem der Ansprüche 1 bis 11, wobei das Verfahren in einem sogenannten Zweischrittverfahren durchgeführt wird.

**15.** Verfahren nach Anspruch 14, wobei der Katalysator in dem zweiten Schritt des Hydrocrackens umgesetzt wird, der dem ersten Schritt der Hydroraffination vorgelagert angeordnet ist, wobei eine intermediäre Trennung zwischen den beiden Bereichen erfolgt.

**Claims**

**1.** A hydrocracking and/or hydrotreatment method using a catalyst that comprises an active phase containing at least one hydro-dehydrogenizing element selected from among group VIB and non-noble group VIII elements of the periodic table, alone or in admixture, and a support comprising at least one zeolite modified according to a modification method comprising at least a) a stage of introducing at least one alkaline cation belonging to groups IA or IIA of the periodic table, b) a stage of treating said zeolite in the presence of at least one molecular compound containing at least one silicon atom, c) at least one stage of partial exchange of the alkaline cations by $NH_4^+$ cations in such a way that the proportion of alkaline cations remaining in the modified zeolite at the end of stage c) is such that the alkaline cation/aluminium molar ratio ranges between 0.2 : 1 and 0.01 : 1, and d) at least one thermal treatment stage, said zeolite having, prior to being modified, at least one series of channels whose opening is defined by a ring with 12 oxygen atoms (12MR), said catalyst being a sulfide phase catalyst.

**2.** A method as claimed in claim 1, wherein the group VIB element is selected from the group made up of tungsten and molybdenum, alone or in admixture.

**3.** A method as claimed in any one of claims 1 or 2, wherein the non-noble group VIII element is selected from the group made up of cobalt and nickel, alone or in admixture.

**4.** A method as claimed in any one of claims 1 to 3, wherein said catalyst comprises at least one group VIB metal in combination with at least one non-noble group VIII metal, the proportion of group VIB metal ranging, in oxide equivalent, between 5 and 40 wt.% in relation to the total mass of said catalyst, and the proportion of non-noble group VIII metal ranging, in oxide equivalent, between 0.5 and 10 wt.% in relation to the total mass of said catalyst.

**5.** A method as claimed in any one of claims 1 to 4, wherein the zeolite initially used is the Y zeolite.

**6.** A method as claimed in any one of claims 1 to 5, wherein said alkaline cation belonging to groups IA and IIA introduced in stage a) is selected from among the following cations: $Na^+$, $Li^+$, $K^+$, $Rb^+$, $Cs^+$, $Ba^{2+}$ and $Ca^{2+}$, and preferably said cation is the $Na^+$ cation.

**7.** A method as claimed in any one of claims 1 to 6, wherein said molecular compound containing at least one silicon atom is the molecular compound tetraethylorthosilicate (TEOS) of formula $Si(OCH_2CH_3)_4$.

**8.** A method as claimed in any one of claims 1 to 7, wherein the proportion of alkaline cations remaining in the modified zeolite at the end of stage c) is such that the alkaline cation/aluminium molar ratio ranges between 0.2 : 1 and 0.015 : 1.

**9.** A method as claimed in any one of claims 1 to 8, wherein the temperature of exchange stage c) ranges between 60°C and 85°C.

10. A method as claimed in any one of claims 1 to 9, wherein said method operates in the presence of hydrogen, at a temperature above 200°C, at a pressure above 1 MPa, the space velocity ranging between 0.1 and 20 h$^{-1}$, and the amount of hydrogen introduced is such that the volume ratio of liter of hydrogen to liter of hydrocarbon ranges between 80 and 5000 l/l.

11. A method as claimed in any one of claims 1 to 10, wherein said hydrocarbon-containing feeds are selected from among light cycle oils from a catalytic cracking unit, atmospheric distillates, vacuum distillates, feeds from lube oil base aromatics extraction units or from lube oil base solvent-dewaxing, distillates from ATR (atmospheric residues) and/or VR (vacuum residues) and/or deasphalted oil fixed-bed or ebullated-bed desulfurization or hydroconversion processes, and deasphalted oils, alone or in admixture.

12. A method as claimed in any one of claims 1 to 11, wherein said method is implemented in a single-stage method.

13. A method as claimed in claim 12, wherein said catalyst is used in a hydrocracking zone arranged downstream from a hydrorefining zone, no intermediate separation being provided between the two zones.

14. A method as claimed in any one of claims 1 to 11, wherein said method is implemented in a two-stage method.

15. A method as claimed in claim 14, wherein said catalyst is used in the second hydrocracking stage downstream from the first hydrorefining stage, an intermediate separation being provided between the two zones.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4402867 A
- US 4996034 A
- US 4451572 A

**Littérature non-brevet citée dans la description**

- **CH. BAERLOCHER ; L. B. MC CUSKER ; D.H. OLSON.** Atlas of Zeolite Structure Types. Elsevier, 2007
- **CHON et al.** *Studies in Surface Science and Catalysis,* 1997, vol. 105, 2059-2065